Europäisches Patentamt

European Patent Office

Office européen des brevets

(19)

(11) Veröffentlichungsnummer : **0 152 785**
**B1**

## (12) EUROPÄISCHE PATENTSCHRIFT

(45) Veröffentlichungstag der Patentschrift :
**19.10.88**

(51) Int. Cl.⁴ : **H 02 K   9/20**

(21) Anmeldenummer : **85100651.0**

(22) Anmeldetag : **23.01.85**

(54) **Drehende Maschine mit Wärmerohr-Kühlung.**

(30) Priorität : **15.02.84 DE 3405297**

(43) Veröffentlichungstag der Anmeldung :
**28.08.85 Patentblatt 85/35**

(45) Bekanntmachung des Hinweises auf die Patenterteilung : **19.10.88 Patentblatt 88/42**

(84) Benannte Vertragsstaaten :
**DE FR GB**

(56) Entgegenhaltungen :
**DE-A- 2 251 841**
**GB-A- 1 361 047**
**LU-A-   67 487**
**US-A- 4 137 472**
**US-A- 4 137 472**
**ELEKTRIE, Band 36, Nr. 1, 1982, Seiten 30-32, Ost-
Berlin, DD; W. MARKERT: "Einsatz von Wärmerohren
zur Kühlung elektrischer Maschinen"**

(73) Patentinhaber : **Kernforschungszentrum Karlsruhe
GmbH**
**Weberstrasse 5 Postfach 3640**
**D-7500 Karlsruhe 1 (DE)**

(72) Erfinder : **von König, Herbert**
**Kappellenweg 25**
**D-3360 Osterode am Harz (DE)**
Erfinder : **Canders, Wolf-Rüdiger, Dr.**
**Am Hohen Ofen 7**
**D-3360 Osterode am Harz (DE)**
Erfinder : **Brost, Ortwin**
**Mörickestrasse 3**
**D-7418 Remseck 2/Neckar (DE)**
Erfinder : **Braun, Helmut**
**Eichenweg 5**
**D-7522 Philippsburg (DE)**
Erfinder : **Unk, Jörg**
**Kolberger Strasse 28e**
**D-7500 Karlsruhe-Waldstadt (DE)**

**Beschreibung**

Die Erfindung betrifft eine drehende Maschine mit einem Wärmerohr, das durch eine an beiden Enden verschlossenen Bohrung in der Läuferwelle gebildet ist, welche zur Wärmeübertragung teilweise mit einem verdampfbaren Arbeitsfluid gefüllt ist, das in einem mit dem Läufer in Wärmekontakt stehenden Verdampfungsabschnitt verdampft und in einem im wesentlichen am Ende des Rohres gelegenen Kondensationsabschnitt kondensiert, welcher von außen kühlbar ist.

Eine derartige Maschine ist aus der DE-A-22 51 841 bekannt. Die Läuferwelle weist einen zentralen Läuferteil aus Stahl und zwei Lagerteile bevorzugt aus Kunststoff oder Aluminium hergestellt, auf. Entlang der Längsachse der Läuferwelle ist eine Bohrung für das Zentrifugalwärmerohr mit einer Verdampferzone und zwei symmetrisch zum Läufer liegenden Kondensationszonen vorgesehen. Die Läuferwelle besteht aus mehreren Teilen und das Wärmerohr enthält ein Arbeitsfluid. Die Innenwandung wird mit einer Klebstoffschicht oder Korrosionsschutz- oder Abdichtungsmasse beschichtet, damit das Arbeitsfluid nicht nach außen entweicht. Die Innenfläche dieser Schicht wird zweckmäßigerweise auf beliebige Weise aufgerauht, z. B. durch Riefen beim Ausdrehen. Die Stirnseiten der Bohrung bleiben allerdings von der Belegung frei.

Weiterhin ist eine Maschine mit einer eine Bohrung konstanten Querschnitts aufweisenden Antriebswelle aus der DE-AS 1 928 358 bekannt.

Die Antriebswelle ist aus fertigungstechnischen Gründen zumindest aus zwei Teilen hergestellt, die miteinander durch eine Schweißnaht verbunden sind. Als Material für die Antriebswelle wird im allgemeinen schlecht wärmeleitender Stahl verwendet, wobei allerdings der Kondensationsabschnitt zur Verbesserung der Wärmeableitung aus Kupfer besteht. Es wird allerdings auch darauf hingewiesen (Spalte 4, 2. Absatz), daß die gesamte Antriebs- bzw. Hohlwelle aus gut wärmeleitendem Material, also Kupfer, hergestellt werden könnte.

Diese Maschine weist jedoch erhebliche Mängel auf. So bedingt die Verwendung von Stahl für die Welle, zusätzlich zur schlechten Wärmeleitfähigkeit, die Erzeugung von Wasserstoffgas durch Zersetzung des Arbeitsmittels $H_2O$, weil das $OH^-$-Radikal mit dem Stahl direkt reagiert. Dieses Wasserstoffgas bildet dann schon nach kurzer Betriebszeit einen Gaspuffer in der zum Wärmerohr ausgebildeten Welle und legt dessen Funktion still. Darüberhinaus bildet jede Schweißnaht oder Fuge in der Oberfläche der Bohrung eine Störstelle für den sich ausbildenden Flüssigkeitsfilm.

Die Herstellung der gesamten Welle aus Kupfer würde zwar das Problem der Wasserstoffbildung beseitigen, das Problem des Vorhandenseins von mindestens einer umlaufenden Rille verbliebe jedoch. Dafür käme ein neues hinzu, nämlich das der Torsions-, Innendruck- und Lagersicherheit. Hohe Drehzahlen der Maschine und hohe Innendrücke in den Bohrungen wären mit einer Kupferwelle, zumindest auf Dauer bei belasteten Maschinen, nicht einzuhalten und ihre Lagerungen hielteneinem Langzeiteinsatz ebenfalls nicht stand.

Die in der DE-AS 1 928 358 beschriebene Maschine weist jedoch noch einen zusätzlichen Nachteil auf. Durch die Ausbildung der Bohrung in der Welle mit konstantem Querschnitt ist der Wirkungsgrad der Kühlung stark eingeschränkt. Es wurde daher vorgeschlagen (CH-PS 632 614), die Bohrung im Kondensationsbereich mit konisch sich zur Stirnseite hin verjüngendem Querschnitt auszuführen. Bezüglich des Materials für die Welle werden keine Angaben gemacht. Die Darstellung der Welle als aus einem einzigen Teil bestehend, ist gerade im Hinblick auf die besondere Ausführungsform der Bohrung falsch. Sie muß, und das dürfte unbestreitbar sein, zumindest aus zwei Teilen bestehen, so daß auch für sie die o. g. Nachteile in bezug auf die Störung des Flüssigkeitsfilms durch umlaufende Rillen und/oder Wasserstoffbildung bzw. Mangel an Festigkeit zutreffen.

Es ergab sich daher die Aufgabe, eine Maschine der o. g. Art derart auszubilden, daß das in der Läuferwelle integrierte Wärmerohr unter Umgehung sämtlicher genannter Nachteile der bekannten Maschinen einen hohen Wirkungsgrad bei gleichzeitiger wirtschaftlicher Fertigungsfähigkeit der Welle aufweist.

Die Lösung ist in den kennzeichnenden Merkmalen des Anspruches 1 beschrieben.

Die übrigen Ansprüche geben vorteilhafte Weiterbildungen und Ausführungsformen bzw. Herstellungsformen der Erfindung wieder.

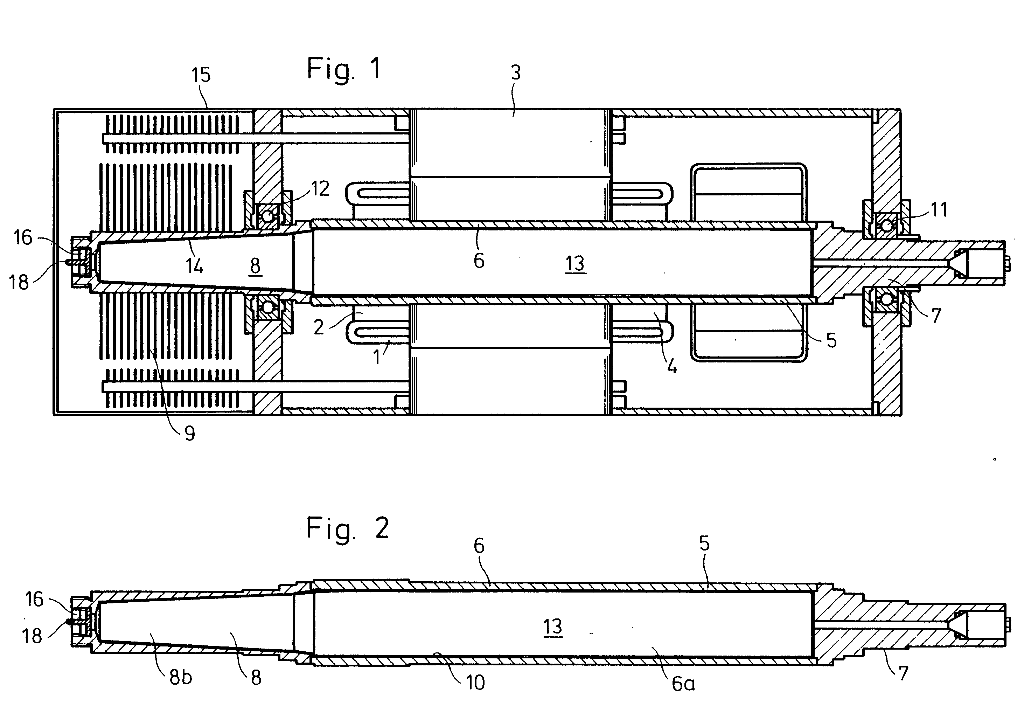

Die Erfindung wird im folgenden mittels Ausführungsbeispielen anhand der Figuren 1 bis 6 näher erläutert.

Der in Figur 1 im Schnitt dargestellte Motor entwickelt im Betriebszustand Wärme. Diese Wärme wird auch über die Wicklungen 1 und Bleche 2 des Ständers 3 und des Läufers 4 auf die Läuferwelle 5 (Ankerwelle) übertragen. Um diese Wärme abzuführen, ist in der Läuferwelle 5 ein durchgehender, abgestufter Hohlraum 13 vorgesehen mit einer beheizten Läuferzone 6, einer Lagerzone 7 und einer Kühlzone 8. Die Kugellager 11, 12 dienen der Lagerung der Läuferwelle 5. Die Ausbildung der Kühlzone 8 ist konisch. Der Hohlraum 13 in der Läuferwelle 5, im folgenden als Wärmerohr bezeichnet, enthält eine Arbeitsflüssigkeit, z. B. Wasser, welches die übertragene Wärme im beheizten Bereich 6a (siehe Figur 2) erhitzt und verdampft, wobei der Dampf im gekühlten Bereich 8b unter Abgabe der Kondensationswärme kondensiert und als Wasser in die beheizte Zone 6, 6a zurück fließt.

Die Wärme wird bevorzugt über ein Kühlrippenpaket 9 abgeführt. Die Ausbildung der Kühlzone 8b als konische Form hat dabei den Vorteil einer höheren Übertragungsleistung, da bei drehender Welle 5 sich ein nur dünner Kondensatfilm bilden kann weil infolge der Hohlkegelwand das an den Innenoberflächen kondensierte Kühlmedium durch die Zentrifugalkraft stets in Richtung der Wärmezone 6a abfließt.

Um eine wirtschaftliche Fertigung zu erreichen, wird das Wärmerohr entsprechend ihren Funktionsbereichen dreiteilig gefertigt und anschließend mit Elektronenstrahl oder anderen Verfahren geschweißt. Die Kühlung über das Kühlrippenpaket 9 kann durch ein zusätzliches Gebläse innerhalb des Gehäuses 15 noch verstärkt werden.

Ein weiterer Vorteil der Erfindung liegt in der Belegung 10 der Innenoberfläche 14, welche einen Korrosionsschutz darstellt, zur Gewährleistung der Funktion des Wärmerohres.

Ausgehend von den guten Erfahrungen mit Kupfer als Wandmaterial bei Wasser-Wärmerohren wurde die Läuferwelle 5 zwar aus wirtschaftlich günstigem Stahl hergestellt, die Innenoberfläche 14 aller drei in Form eines Paßsystems verbundene Teile 6-8 einschließlich der unlaufenden Rillen an den Paßstellen jedoch porenfrei belegt.

Diese Belegung 10 aus einer homogen aufgebrachten Schicht aus gut wärmeleitendem Material, wie z. B. Cu oder Ni, wird durch eine relativ kleine Öffnung 16 in der Stirnseite der Welle 5 im Bereich der Kühlzone 8, 8b vorgenommen, die unproblematisch mittels eines Stopfens 18 aus dem gleichen Material wie die Belegung 10 verschlossen werden kann. Die verbleibende Rille zwischen Stopfen 18 und Welle 5 wirkt an dieser Stelle nicht störend.

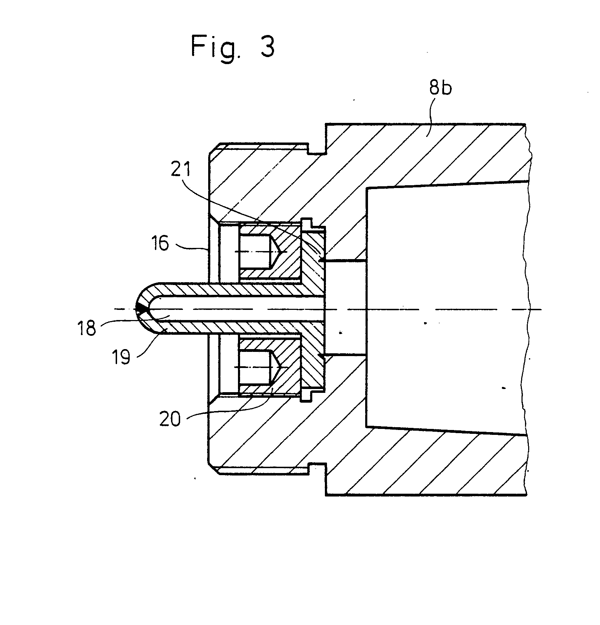

Die beiden Stirnseiten 16, 18 und 7 können auch besonders ausgebildet sein. So besteht die Stirnseite (Figur 3) am Rohrteil 8b z. B. aus einem Einfüllelement (Cu) 19 und einem Verschlußteil 20, wobei das Verschlußteil 20 in einem Gewinde geführt, das Einfüllelement 19 an die Stirnseite des Rohres gepreßt ist. Dabei ist gleichzeitig eine stirnseitige Schneidkante 21 vorgesehen, die in das Einfüllelement 19 schneidet und somit gasdicht abdichtet. Nach Einfüllen des Mediums wird der Nippel des Einfüllelementes 19 gequetscht, und die Öffnung verlötet oder verschweißt. Ein Deckel mit Zentrierung geschweißt oder gelötet, bildet den Abschluß (nicht dargestellt).

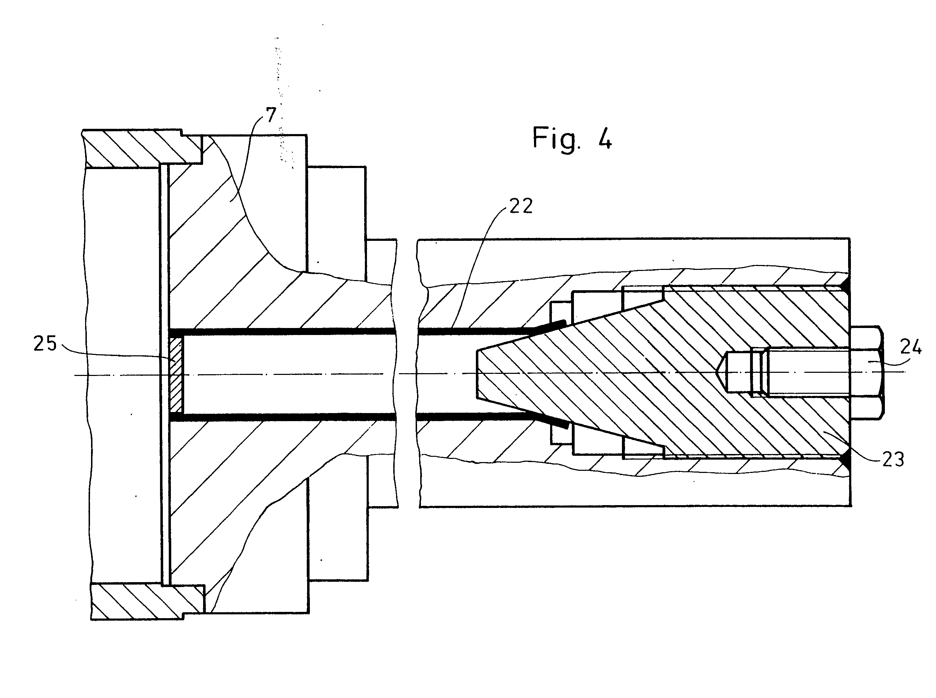

Der Verschluß auf der Lagerseite 7 (Figur 4) ist z. B. gekennzeichnet durch ein Cu-Rohr 22 mit einer nach außen zeigenden Aufweitung — eingesetzt in der Innenbohrung — und einem konisch geformten Verschlußstopfen 23, welcher mit Hilfe einer Schraube 24 in das Rohr geschraubt Gasdichtheit gewährleistet. Das Rohr 22 wird nach innen verschlossen durch eine eingeschweißte Cu-Scheibe 25. Das Hilfsgewinde der Schraube 24 dient nach Entfernen derselben anschließend als Wellenzentrierung.

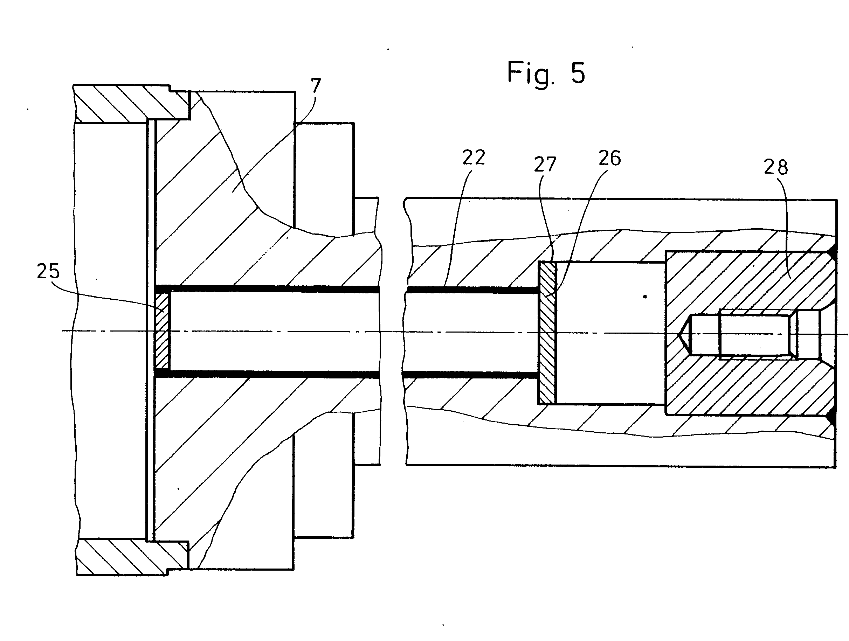

Der Verschluß in der Lagerzone 7 (siehe Fig.5) kann auch dadurch gekennzeichnet sein, daß das Cu-Rohr 22 vor der Innenbeschichtung des Wärmerohres bzw. der Welle mit dem Grundmaterial von 7 verlötet wird und das Rohr 22 nach dem Beschichten mit den Verschlußteilen 25 und/oder 26 durch Schweißen hermetisch verschlossen wird. Ein Verschlußstopfen 28 bildet eingesetzt und verschweißt mit Zentriersenkung den Abschluß.

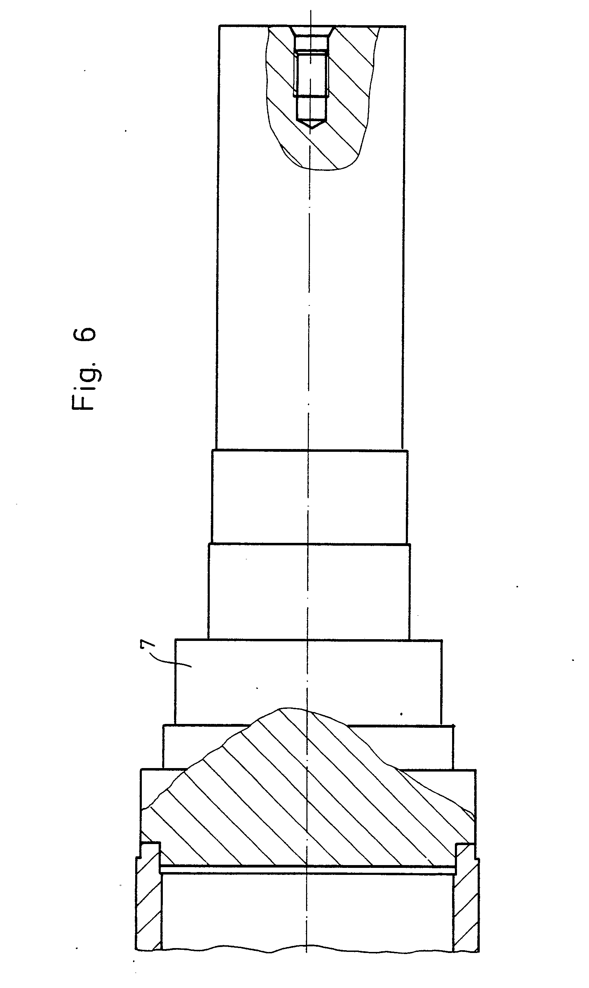

Das Teil 7 ist auch durch Vollausbildung des Körpers (Figur 6) herstellbar. Die Innenverkupferung wird von der Stirnseite 16 vorgenommen.

Als Ausführungsformen für die Belegung kommen z. B. drei Möglichkeiten, nämlich das stromlose Verkupfern, das Verkupfern unter Spannung und das stromlose Vernickeln in Betracht. Die chemische Verträglichkeit der Belegung 10 mit dem Arbeitsmittel $H_2O$ bleibt erhalten.

Das stromlose Vernickeln ergibt eine porendicht geschlossene Nickelschicht 10. Es muß jedoch darauf geachtet werden, daß das abgelagerte Nickel absolut rein ist und nicht etwa Phosphor enthält.

Das stromlose Verkupfern ergibt eine geschlossene, glatte Belegung 10. Es ist jedoch nur bedingt anwendbar.

Das Verkupfern der Läuferwelle 5 bzw. der Innenoberfläche 14 unter Spannung ergibt eine glatte, geschlossene und dichte Oberfläche, die auch nach dem Reinigen ihr Aussehen nicht verändert und bei der keinerlei Abtrag festgestellt werden kann. Ein so hergestelltes Wärmerohr arbeitet zur vollen Zufriedenheit und wurde über den Zeitraum von 28 Monaten (ca. 20000 Stunden) ohne Unterbrechung im Dauerversuch betrieben, ohne daß eine Veränderung seines Wärmetransportvermögens festgestellt wurde.

Die charakteristische Temperaturdifferenz zwischen Ende der Heizzone und Ende der Kühlzone ist seit Beginn des Dauerbetriebs mit ungefähr 3 K konstant, was einen sehr guten Wert darstellt.

Damit ist ein Weg gefunden, Wasser-Wärmerohre nach einer einfachen und billigen Fertigungsmethode herzustellen, wobei die Eigenschaften des kompakten Wärmerohres aus Kupfer erreicht werden.

Beispiel für ein kostengünstiges Wärmerohr
Werkstoff : St 35
Geometrie : $d_a = 20$ mm ; $d = 16$ mm ; L = 1000 mm
galv. Überzug : innen Kupfer, Schichtdicke = 0,15mm
Oberflächentemperaturdifferenz : zwischen Heiz- u. Kühlzone
$\Delta T < 3K$

**Patentansprüche**

1. Drehende Maschine mit einem Wärmerohr, das durch eine an beiden Enden verschlossenen Bohrung (13) in der Läuferwelle (5) gebildet ist, welche zur Wärmeübertragung teilweise mit einem verdampfbaren Arbeitsfluid gefüllt ist, das in einem mit dem Läufer (4) in Wärmekontakt stehenden Verdampfungsabschnitt (6) verdampft und in einem im wesentlichen am Ende des Rohres gelegenen Kondensationsabschnitt (8) kondensiert, welcher von außen kühlbar ist, dadurch gekennzeichnet, daß die Läuferwelle (5) aus Stahl hoher Festigkeit besteht und aus mehreren Teilen (6-8) durch ein Paßstecksystem zu einer Einheit gasdicht verbunden ist, wobei die gesamte Oberfläche (14) — einschließlich der umlaufenden Rillen an den Paßstellen — der Bohrung (13) in der Läuferwelle (5) mit einer homogenen, porenfreien Belegung (10) aus Cu oder Ni versehen ist, die mit der Arbeitsflüssigkeit nicht reagiert.

2. Drehende Maschine nach Anspruch 1, dadurch gekennzeichnet, daß die Belegung (10) der Bohrung (13) durch stromloses Vernickeln oder Verkupfern oder durch Verkupfern unter Spannung erfolgt.

3. Drehende Maschine nach Anspruch 1 oder 2, dadurch gekennzeichnet, daß die Belegung (10) der Bohrung (13) durch eine in einer Stirnseite der Maschinenwelle (5) angebrachte, dicht verschließbare Öffnung (16) erfolgt.

4. Drehende Maschine nach Anspruch 1 oder einem der folgenden, dadurch gekennzeichnet, daß die Stirnseite (16, 18) aus einem Einfüllelement (19) und einem Verschlußteil (20) besteht, wobei das Einfüllelement (19) an die Stirnseite des Rohrteiles (8b) mittels einer Schneidkante (21) gasdicht angepreßt ist.

5. Drehende Maschine nach Anspruch 1 oder einem der folgenden, dadurch gekennzeichnet, daß die Stirnseite (7) durch ein Rohr (22) gebildet ist, in das ein Verschlußstopfen (23) gasdicht eingepreßt ist.

6. Drehende Maschine nach Anspruch 1 oder einem der folgenden, ausgenommen Anspruch 5, dadurch gekennzeichnet, daß die Stirnseite (7) durch ein Rohr (22) mit einem Innenverschluß (25) und Außenverschluß (26) gebildet ist, wobei das Rohr (22) vor dem Aufbringen der Belegung mit der Lagerzone verlötet wird.

**Claims**

1. A rotating machine with a heat pipe which is constructed as a bore (13) closed at both ends in an rotor shaft (5) which for the purpose of heat transfer is partly filled with an evaporatable working fluid which is evaporated in an evaporating section (6) in continuous thermal contact with the rotor (4) and condenses in a condensing section (8) substantially at the end of the pipe, which may be cooled from the exterior, characterised in that the rotor shaft (5) is made of high strength steel and is joined together from several parts (6-8) into a single unit by means of a system of fitted joints, wherein the total surface (14), including the encircling grooves at the joints, of bore (13) in the rotor shaft (5) is provided with a homogeneous non-porous coating (10) of Cu or Ni which does not react with the working fluid.

2. A rotating machine according to Claim 1, characterised in that the coating (10) of bore (13) is produced by non-electrical nickel or copper plating or by copper electroplating.

3. A rotating machine according to claims 1 or 2, characterised in that the coating (10) of bore (13) is achieved through an opening (16) made in the front face of the machine shaft (5) which can be sealed a leaktight manner.

4. A rotating machine according to Claim 1 or any subsequent claim, characterised in that the front face (16, 18) consists of a filling element (19) and a closing member (20), wherein the filling element (19) is pressed in a gas-tight manner against the front face of the pipe portion (8b) by means of a cutting edge (21).

5. A rotating machine according to Claim 1 or any subsequent claim, characterised in that the front face (7) is formed of a pipe (22) in which a plug (23) is pressed to form a gas-tight seal.

6. A rotating machine according to Claim 1 or any subsequent claim, with the exception of Claim 5, characterised in that the front face (7) is constructed of a pipe (22) with an internal closure (25) and an external closure (26), wherein the pipe (22) is soldered to the bearing zone prior to application of the coating.

**Revendications**

1. Machine tournante comportant un tube échangeur de chaleur qui est constitué d'un alésage (13), fermé aux deux extrémités, pratiqué dans l'arbre tournant (5), alésage en partie rempli, pour la transmission de la chaleur, d'un fluide actif évaporable qui est évaporé dans une section d'évaporation (6) se trouvant en contact thermique avec le rotor (4), et se condense dans une section de condensation (8) disposée essentiellement à l'extrémité du conduit, laquelle est refroidissable de l'extérieur, machine tournante caractérisée en ce que l'arbre tournant (5) est constitué d'acier à haute résistance mécanique et est assemblé, de façon imperméable aux gaz, en une unité à partir de plusieurs éléments (6-8) au moyen d'un système d'ajustage, la surface totale (14) — y compris les rainures circulaires au niveau des points d'ajustage — de l'alésage (13) dans l'arbre tournant (5) étant munie d'un revêtement uniforme (10) en Cu ou Ni, exempt de pores, qui ne réagit pas avec le fluide actif.

2. Machine tournante selon la revendication 1, caractérisée en ce que le revêtement (10) de l'alésage (13) est effectué par nickelage ou cuivrage sans courant ou par cuivrage sous tension.

3. Machine tournante selon la revendication 1 ou 2, caractérisée en ce que le revêtement (10) de l'alésage (13) est effectué à travers un orifice (16) pouvant être obturé de façon étanche par sondage, pratiqué dans une face frontale de l'arbre (5) de la machine.

4. Machine tournante selon la revendication 1 ou l'une quelconque des suivantes, caractérisée en ce que la face frontale (16, 15) est constituée d'un élément de remplissage (19) et d'une pièce d'obturation (20), l'élément de remplissage (19) étant pressé, de façon imperméable aux gaz, contre la face frontale du segment de tube (8b), au moyen d'une arête coupante (21).

5. Machine tournante selon la revendication 1 ou l'une quelconque des suivantes, caractérisée en ce que la face frontale (7) est constituée d'un tube (22) dans lequel un bouchon d'obturation (23) est introduit par pression, de façon imperméable aux gaz.

6. Machine tournante selon la revendication 1 ou l'une quelconque des suivantes, à l'exception de la revendication 5, caractérisée en ce que la face frontale (7) est constituée d'un tube (22) comportant une obturation interne (25) et une obturation externe (26), le tube (22) étant assemblé par brasage à la zone de roulement, avant l'application du revêtement.

0 152 785

**Fig. 1**

15    3

16
18    14    8    12    6    13    5    11    7

9    2    1    4

**Fig. 2**

6    5

16
18    13

8b    8    10    6a    7

# Fig. 3

Fig. 4

0 152 785

Fig. 5

0 152 785

Fig. 6